# EUROPÄISCHE PATENTSCHRIFT

(11) **EP 3 593 886 B1**
(45) Veröffentlichungstag und Bekanntmachung des Hinweises auf die Patenterteilung: **22.09.2021**
(21) Anmeldenummer: 19184947.0
(22) Anmeldetag: 08.07.2019
(51) Int. Cl.: B01D 46/00, B01D 46/24, B01D 46/52

(54) **KONTAMINATIONSFREI WECHSELBARE FILTERPATRONE**
CONTAMINATION-FREE REMOVABLE FILTER CARTRIDGE
CARTOUCHE FILTRANTE REMPLAÇABLE SANS CONTAMINATION

(30) Priorität: 13.07.2018 DE 102018117050
(43) Veröffentlichungstag der Anmeldung: 15.01.2020
(73) Patentinhaber: Olofsson, Lars, 48734 Reken (DE)
(72) Erfinder: Olofsson, Lars, 48734 Reken (DE)
(74) Vertreter: Seyer, Roman

(56) Entgegenhaltungen:
- DE-A1- 2 600 338
- DE-A1- 4 216 343
- DE-A1-102015 105 059
- US-A1- 2007 221 585

## Beschreibung

Die vorliegende Erfindung betrifft eine Luftfiltervorrichtung sowie ein Verfahren zum kontaminationsfreien Wechseln einer Filterpatrone.

Filterpatronen, insbesondere Einweg-Filterpatronen, werden in Luftfiltervorrichtungen, insbesondere in Industrie-Filteranlagen wie Absauganlagen für die Rauch- und Staubabsaugung sowie in Raumlüftungssystemen verwendet. In vielen Industrieprozessen entsteht gesundheitsschädigender Rauch, Staub oder Luft, die störende Partikel oder Gase enthält, sodass diese Kontaminationen entweder direkt am Entstehungsort über Absaugarme oder mittels einer im Raum stationär angeordneten Luftfiltervorrichtung abgesaugt und aus der Luft gefiltert werden. Die Kontaminationen sammeln sich in der Filterpatrone an, die nach einer gewissen Zeit auszutauschen ist.

Die aus dem Stand der Technik hierzu verwendeten Filterpatronen weisen in der Regel eine kreiszylindrische Grundform auf, wobei der Mantel der zylindrischen Grundform aus dem Filtermaterial gebildet wird. Das Filtermaterial liegt in der Regel in der Form eines Faltenfilters vor. Die Rotationsachse des Zylinders, d.h. die Längsachse, befindet sich im Luftleitungskanal der Filterpatrone, durch den die gefilterte Luft strömt. Die zu reinigende Luft strömt die Filterpatrone von außen an, und gelangt durch das Filtermaterial in den innen liegenden Luftleitungskanal, während die aus der Luft abzutrennenden Partikel in dem Filter verbleiben. Sobald die Schmutzpartikel das Filtermaterial zu einem bestimmten Anteil zugesetzt haben und eine Abreinigung per Druckluft-Rückstoß nicht mehr ausreicht, ist die Filterpatrone durch eine neue Filterpatrone zu tauschen.

Nachteilig bei den aus dem Stand der Technik bekannten Luftfiltervorrichtungen ist, dass die Person, die eine zugesetzte Filterpatrone durch eine neue Filterpatrone austauscht, mit der verschmutzen, kontaminierten Schmutzseite, d.h. der Außenseite, in Kontakt kommt. Zunächst ist die Befestigung der Filterpatrone, mit der diese in der Luftfiltervorrichtung, beispielsweise einer Absaugvorrichtung, in der Gebrauchsposition gehalten wird, zu lösen. In der Regel sind Filterpatronen so in der Luftfiltervorrichtung verbaut, dass die Längsachse vertikal verläuft. Die Filterpatrone ist an einem Ende oder an beiden Enden mit der Luftfiltervorrichtung verbunden. Die Befestigungen müssen vor der Entnahme durch die relativ kleine Filterwechselklappe gelöst werden, sodass die den Wechsel durchführende Person beim Lösen dieser Befestigungen zwangsläufig mit der Schmutzseite des Filtermaterials in Kontakt kommt. Der Entnahmevorgang führt des Weiteren zu Erschütterungen der Filterpatrone, wodurch an der Schmutzseite haftende Partikel die Raumluft kontaminieren.

Aus dem Stand der Technik sind des Weiteren Absaugvorrichtungen bekannt, die versuchen diese Problematik zu lösen, indem eine Schutzumhüllung außen an der Filterwechselklappe angebracht wird, in die die Filterpatrone nach dem Lösen der Haltebefestigungen gezogen werden kann. Derartige Vorrichtungen sind aus DE 42 16 343 A1 bekannt.

US 2007/221585 A1 offenbart eine Filterpatrone mit einer Schutzhülle, die vor dem Einsetzen in eine Luftfiltervorrichtung zu entfernen ist.

Nachteilig bei derartigen Vorrichtungen ist, dass die den Wechsel durchführende Person während des Lösens der Befestigungen, mit denen die Filterpatrone innerhalb der Luftfiltervorrichtung fixiert ist, mit der Schmutzseite der Filterpatrone in Kontakt kommt. Zudem lösen sich, während die Filterpatrone in die außerhalb der Luftfiltervorrichtung angeordnete Schutzumhüllung gezogen wird, Partikel von der Schmutzseite, die sich innerhalb der Luftfiltervorrichtung verteilen und vor dem Einsetzen der neuen Filterpatrone durch die Wechselklappe an die Raumluft abgegeben werden können oder innerhalb der Luftfiltervorrichtung verbleiben und die anschließend eingesetzte Filterpatrone zusetzen können.

Die Aufgabe der Erfindung ist, eine Luftfiltervorrichtung bereitzustellen, die die aus dem Stand der Technik bekannten Nachteile überwindet. Die Aufgabe der Erfindung ist somit, eine Luftfiltervorrichtung bereitzustellen, deren Filterpatrone kontaminationsfrei gewechselt werden kann.

Zur Lösung der Aufgabe ist eine Luftfiltervorrichtung, insbesondere Absaugvorrichtung, vorgesehen, umfassend eine austauschbare Filterpatrone, wobei die Filterpatrone Filtermaterial, das einen Hohlzylinder ausbildet, ein erstes Abschlusselement, das an dem ersten Ende des Hohlzylinders angeordnet ist, und ein zweites Abschlusselement, das an dem zweiten Ende des Hohlzylinders angeordnet ist, umfasst, dadurch gekennzeichnet, dass die Filterpatrone eine schlauchförmige Schutzumhüllung aufweist und einschließlich Schutzumhüllung vollständig innerhalb der Luftfiltervorrichtung angeordnet ist, wobei das erste Ende der Schutzumhüllung an dem ersten Abschlusselement befestigt ist, und das zweite Ende der Schutzumhüllung von einer ersten Stellung, in der das zweite Ende der Schutzumhüllung näher an dem ersten Abschlusselement als an dem zweiten Abschlusselement lösbar befestigt ist, in eine zweite Stellung bewegbar ist, in der das zweite Ende der Schutzumhüllung am zweiten Abschlusselement befestigt ist.

Somit ist es erfindungsgemäß vorgesehen, die Filterpatrone vollständig einschließlich der Schutzumhüllung in eine Luftfiltervorrichtung einzusetzen.

Die in der Luftfiltervorrichtung angeordnete Filterpatrone weist eine zylindrische Grundform auf, wobei der Mantel der zylindrischen Grundform aus dem Filtermaterial gebildet wird. Die Filterpatrone umfasst zudem zwei Abschlusselemente und eine Schutzumhüllung. Außerdem können, bevorzugt an den Abschlusselementen, weitere Bestandteile, wie beispielsweise Fixierelemente oder Abdichtungsvorrichtungen an der Filterpatrone angeordnet sein. Derartige Fixierelemente können einen Flansch aufweisen oder in Form einer Steck- oder Schraubverbindung ausgestaltet sein. Die Abdichtungsvorrichtungen, beispielsweise in Form von Dichtlippen oder eines O-Rings, können den Luftleitungskanal abdichten und sorgen dafür, dass keine ungefilterte Luft die Luftfiltervorrichtung passiert. Neben den genannten Komponenten kann die Filterpatrone weitere Komponenten aufweisen.

Das Filtermaterial bildet einen Hohlzylinder mit einem ersten und einem zweiten Ende aus, wobei, bei einem vertikal angeordneten Zylinder, das erste Ende definitionsgemäß oben und das zweite Ende unten zu finden ist. Bevorzugt ist der durch das Filtermaterial ausgebildete Hohlzylinder vertikal angeordnet. Bevorzugt ist der durch das Filtermaterial ausgebildete Hohlzylinder ein Kreis-Hohlzylinder. Als Filtermaterialien können alle dem Fachmann zu diesem Zweck bekannten Materialien verwendet werden, wie beispielsweise Zellulose, Vliesstoffe oder Schaumstoffe. Das Filtermaterial kann auch in Faltenform vorliegen, wobei die Kanten der Faltungen bevorzugt parallel zur Längsachse des Hohlzylinders verlaufen. In einer solchen Ausführungsform weist die Mantelfläche zwar keine glatte Oberfläche auf, wie es streng genommen bei einem Zylinder der Fall sein müsste, dennoch wird erfindungsgemäß bei einer solchen Ausgestaltung des Filtermaterials noch von einem Hohlzylinder gesprochen.

Der Luftleitungskanal befindet sich im Inneren des Hohlzylinders. Die Seite des Filtermaterials, die dem Luftleitungskanal zugewandt ist, ist die Reinluftseite, während die Seite des Filtermaterials, die die Außenseite des Hohlzylinders bildet, die Schmutzseite darstellt.

Es können zudem weitere Vorrichtungen, wie beispielsweise Bänder oder Gitter vorhanden sein, die dazu beitragen können, das Filtermaterial in Form zu halten.

Die Filterpatrone weist ein erstes und ein zweites Abschlusselement auf. Unter einem Abschlusselement wird ein Element verstanden, dass an einem der Enden des durch das Filtermaterial ausgebildeten Hohlzylinders angeordnet ist. Die Abschlusselemente können an den Stirnseiten des Hohlzylinders angeordnet sein, d.h. einen Deckel bzw. Boden, gegebenenfalls mit einer Öffnung für den Luftleitungskanal, ausbilden. Die Abschlusselemente können aber auch derart an den Enden angeordnet sein, dass sie die Enden des Hohlzylinder umfangsmäßig umgeben, sodass sich die zur Verfügung stehende Filterfläche zwischen den beiden Abschlusselementen erstreckt, wobei die Filterfläche, die von den Abschlusselemente bedeckt wird, für die Luftfilterung möglicherweise nicht zur Verfügung steht. In einer Ausführungsform ist ein Abschlusselement ein Ring, der an einem Ende des Hohlzylinders angeordnet ist. Ebenso ist erfindungsgemäß vorgesehen, dass das Abschlusselement so ausgestaltet ist, dass es sowohl an einer der Stirnseiten angeordnet ist als auch sich bis über die Außenfläche und/oder Innenfläche des Filtermaterials erstreckt und somit den äußeren Rand der Außen- und/oder Innenfläche des Hohlzylinders umfangsmäßig umgibt. So wird vorzugsweise als Abschlusselement ein Ring mit einem L-Profil verwendet, wobei ein Schenkel des L-Profils an der Mantelfläche des Hohlzylinders und ein Schenkel an der Stirnseite des Hohlfilters angeordnet sind. Ebenso bevorzugt ist ein Abschlusselement in Form eines Ringes, der ein Z-Profil aufweist, wobei der im Vergleich zum L-Profil zusätzliche Schenkel eine 90° Abkantung nach außen am anderen Ende des Schenkels ist, der an der Mantelfläche des Hohlzylinders anliegt. Die Abschlusselemente können unter anderem dazu dienen, das Filtermaterial in der Form des Hohlzylinders zu halten. Ebenso können die Abschlusselemente Dichtvorrichtungen oder Vorrichtungen zur Fixierung der Filterpatrone in der Luftfiltervorrichtung aufweisen. Das erste Abschlusselement ist, bei einer vertikal ausgerichteten Filterpatrone, das am oberen Ende des Hohlzylinders angeordnete Abschlusselement, während das zweite Abschlusselement, bei einer vertikal ausgerichteten Filterpatrone, das am unteren Ende des Hohlzylinders angeordnete Abschlusselement ist. Das Abschlusselement kann den Boden bzw. Deckel, ggf. mit einer Öffnung für den Luftleitungskanal, des Hohlzylinders ausbilden, es ist erfindungsgemäß allerdings ebenso vorgesehen, dass das Abschlusselement zusätzlich zu einem Boden- bzw. Deckelelement vorhanden ist. Bevorzugt umgibt das erste und/oder zweite Abschlusselement einen Teil der Außenfläche, bevorzugt den oberen bzw. unteren Randbereich des aus Filtermaterial ausgebildeten Hohlzylinders umfangsmäßig.

Die Schutzumhüllung der Filterpatrone liegt in Form eines Schlauches mit einem ersten Ende und einem zweiten Ende vor. Die Filterpatrone mit dem durch das Filtermaterial ausgebildeten Hohlzylinder sowie dem ersten und zweiten Abschlusselement befindet sich zumindest teilweise innerhalb der schlauchförmigen Schutzumhüllung. Das erste Ende der Schutzumhüllung ist am ersten Abschlusselement befestigt. Das zweite Ende der Schutzumhüllung ist, in einer ersten Stellung näher am ersten Abschlusselement befestigt, als am zweiten Abschlusselement. Somit ist der Großteil, d.h. mindestens 50%, bevorzugt mehr als 75 %, besonders bevorzugt mehr als 90 %, der Filterfläche der Schmutzseite nicht durch die Schutzumhüllung bedeckt und steht als Filterfläche zur Verfügung.

Die Befestigung des zweiten Endes der Schutzumhüllung ist lösbar, sodass das zweite Ende der Schutzumhüllung in eine zweite Stellung bewegbar ist, bei der sich der Teil der Filterfläche der Schmutzseite des Hohlzylinders, der zwischen dem ersten und dem zweiten Abschlusselement befindet, vollständig innerhalb der Schutzumhüllung befindet. In dieser zweiten Stellung ist das zweite Ende der Schutzumhüllung am zweiten Abschlusselement befestigt und die Filter-fläche der Schmutzseite ist vollständig mit der Schutzumhüllung umgeben.

Die erfindungsgemäße Luftfiltervorrichtung ermöglicht einen kontaminationsfreien Filterwechsel. Die Filterpatrone wird in die Luftfiltervorrichtung eingebracht, wobei sich das zweite Ende der Schutzumhüllung in der ersten Stellung befindet. Sobald der Filter während des Betriebes der Luftfiltervorrichtung so viel Schmutz angesammelt hat, dass er ausgetauscht werden muss, kann die Filterwechselklappe geöffnet, das zweite Ende der Schutzumhüllung nach dem Lösen in die zweite Stellung bewegt und an dem zweiten Abschlusselement befestigt werden. Anschließend können die Fixierelemente, mit denen die Filterpatrone innerhalb der Luftfiltervorrichtung fixiert wird, gelöst und die Filterpatrone entnommen werden. Selbst wenn Erschütterungen während des Entnahmevorganges Partikel von der Schmutzseite der Filterpatrone lösen, können sie weder die Luftfiltervorrichtung oder die Umgebungsluft kontaminieren, da sie vollständig von der Schutzumhüllung umgeben sind und die Filterpatrone somit bereits verschlossen aus der Luftfiltervorrichtung entnommen wird. Die optional vorhandenen Fixierelemente, die zur Befestigung der Filterpatrone innerhalb der Luftfiltervorrichtung dienen, werden durch die Schutzumhüllung, in der zweiten Stellung, nicht bedeckt und können demzufolge selbst dann gelöst werden, wenn sich das zweite Ende der Schutzumhüllung in der zweiten Stellung befindet. Die Filterpatrone kann in allen Luftfiltervorrichtungen, in denen derartige Filterpatronen ohne Schutzumhüllung verwendet werden können, eingesetzt werden, ohne dass an der Luftfiltervorrichtung bauliche Veränderungen vorzunehmen sind.

Die Schutzumhüllung der Filterpatrone ist möglichst flexibel, sodass sie in der ersten Stellung so angeordnet werden kann, dass sie wenig Raum einnimmt und somit wenig Filterfläche bedeckt. Bevorzugt umhüllt sie, wenn sich das zweite Ende der Schutzumhüllung in der ersten Stellung befindet, nur das erste Abschlusselement und reduziert somit nicht die zur Verfügung stehende Filterfläche. Der Abstand des ersten Endes der Schutzumhüllung zum zweiten Ende der Schutzumhüllung ist in der ersten Stellung möglichst gering. Um diesen geringen Abstand zu gewährleisten ist die Schutzumhüllung lamellenartig oder zickzackförmig gefaltet, oder wird durch ein Zusammenschieben der beiden Enden der Schutzumhüllung, insbesondere bei Verwendung eines dünnen Folienschlauches, willkürlich gefaltet bzw. zusammengerafft. Bei Bewegung des zweiten Endes der Schutzumhüllung in die zweite Stellung wird die Schutzumhüllung entfaltet.

Die Befestigung der Enden der Schutzumhüllung an den Abschlusselementen kann mittels diverser Befestigungselemente erfolgen. Das erste Ende der schlauchförmigen Schutzumhüllung kann fest oder lösbar mit dem ersten Abschlusselement verbunden sein. Ebenso kann das zweite Ende der schlauchförmigen Schutzumhüllung, in der zweiten Stellung, fest oder lösbar mit dem zweiten Abschlusselement verbunden sein. Beispielsweise kann hierzu der obere bzw. untere Randbereich der Schlauchinnenseite, bevorzugt vollflächig, an das erste bzw. zweite Abschlusselement geklebt, geheftet, geklemmt, genietet, geschraubt oder geschweißt sein, oder an das erste bzw. zweite Abschlusselement mittels einer Spannvorrichtung gedrückt oder magnetisch oder anderweitig fixiert sein. Als Spannvorrichtung kann beispielsweise ein Ring, bevorzugt ein Spannring, oder ein Band, insbesondere ein elastisches Band verwendet werden.

In der ersten Stellung ist das zweite Ende der schlauchförmigen Schutzumhüllung lösbar befestigt. Es kann an dem ersten Abschlusselement, an dem aus Filtermaterial ausgebildeten Hohlzylinder oder an der Luftfiltervorrichtung mittels eines Befestigungselementes so befestigt sein, dass die Außenfläche des Filtermaterials größtenteils nicht bedeckt ist. Beispielsweise kann hierzu der untere Randbereich der Schlauchinnenseite, bevorzugt vollflächig, an den aus Filtermaterial ausgebildeten Hohlzylinder geklemmt oder geschraubt sein, bzw. an den aus Filtermaterial ausgebildeten Hohlzylinder mittels einer Spannvorrichtung gedrückt oder magnetisch oder anderweitig fixiert sein. Als Spannvorrichtung kann beispielsweise ein Ring, bevorzugt ein Spannring oder ein Band, insbesondere ein elastisches Band verwendet werden. Bevorzugt ist das zweite Ende der schlauchförmigen Umhüllung mittels derselben Befestigungsart oder desselben Befestigungsmittels in der ersten und in der zweiten Stellung fixiert.

Unter einer Luftfiltervorrichtung wird erfindungsgemäß eine Vorrichtung verstanden, in der Partikel oder Gas aus der Luft abgetrennt und zurückgehalten werden, während die gereinigte Luft wieder die Luftfiltervorrichtung verlässt. Beispielsweise sind Absauganlagen für Rauch und Staub sowie Raumluftreinigungssysteme Luftfiltervorrichtungen.

Erfindungsgemäß wird unter einem Ende eines Gegenstandes ein Bereich verstanden, der sich von dem einem Ende des Gegenstandes bis zu 1/6 der Gesamtlänge des Gegenstandes in Richtung des anderen Endes des Gegenstandes erstrecken kann. In anderen Worten, das erste Ende und das zweite Ende eines Gegenstandes nehmen maximal das erste 1/6 und maximal das letzte 1/6 des Gegenstandes in Längsrichtung ein.

In einer vorteilhaften Ausgestaltung der Erfindung sind das erste und das zweite Ende der Schutzumhüllung in der ersten Stellung an dem ersten Abschlusselement befestigt. In einer solchen Ausgestaltung umgibt die zusammengeraffte oder zusammengefaltete Schutzumhüllung nur das erste Abschlusselement des aus Filtermaterial ausgebildeten Holzylinders, wodurch die Außen-Filterfläche nicht durch die Schutzumhüllung bedeckt wird. Das zweite Ende der Schutzumhüllung ist bei einer vertikal angeordneten Filterpatrone bevorzugt unterhalb des ersten Endes der Schutzumhüllung am ersten Abschlusselement angeordnet.

In einer vorteilhaften Ausgestaltung der Erfindung ist die Schutzumhüllung ein Folienschlauch, bevorzugt ein Folienschlauch aus Polyethylen, Polypropylen und/oder Polyvinylchlorid. Folienschläuche bieten den Vorteil, dass sich die Folie aufgrund der geringen Dicke sehr gut komprimieren, zusammenfalten oder zusammenraffen lässt, dass ein solche Folie leicht ist, und dass Partikel effektiv zurückgehalten werden können.

Bevorzugt weist das zweite Ende der Schutzumhüllung ein Befestigungselement, bevorzugt ein Befestigungselement ausgewählt aus der Gruppe bestehend aus einem Spannelement, einem Klemmelement, einem Klebelement, einem magnetischen Element und einem Klettverschlusselement, auf, mit dem es in der ersten Stellung befestigbar ist und/oder mit dem es in der zweiten Stellung an dem zweiten Abschlusselement befestigbar ist.

In einer vorteilhaften Ausgestaltung der Erfindung ist das Befestigungselement ein Spannring, der bevorzugt im nicht gespannten Zustand einen um mindestens 5%, bevorzugt um mindestens 10%, besonders bevorzugt um mindestens 15%, größeren Innendurchmesser aufweist als der maximale Außendurchmesser des durch das Filtermaterial ausgebildeten Hohlzylinders. Diese Ausgestaltung ermöglicht eine Bewegung von der ersten in die zweite Stellung, ohne, dass das Befestigungselement mit dem Filtermaterial in Kontakt kommt und Partikel aus dem Filtermaterial löst.

Bevorzugt bildet die Schutzumhüllung in der zweiten Stellung, d.h. im ausgebreiteten Zustand, einen Hohlzylinder aus. Die Grundfläche des durch die Schutzumhüllung in diesem Zustand ausgebildeten Hohlzylinders überragt die Grundfläche des aus Filtermaterial ausgebildeten Hohlzylinder bevorzugt um mindestens 5%, besonders bevorzugt um mindestens 10% ganz besonders bevorzugt um mindestens 15%. Eine solche Schutzumhüllung bewirkt, dass der Kontakt zwischen der Schmutzseite des Filtermaterials und der Folie minimiert wird, sodass möglichst wenig Partikel von der Schmutzseite gelöst werden, während das zweite Ende der Schutzumhüllung von der ersten in die zweite Stellung bewegt wird.

Das zweite Ende der Schutzumhüllung umfasst vorzugsweise mindestens ein Gewichtselement, bevorzugt ein Gewichtselement in Form eines den aus Filtermaterial ausgebildeten Hohlzylinder umgebenden Ringes. Das Gewichtselement kann ebenso aus mehreren umfangsmäßig verteilt, bevorzugt umfangsmäßig gleichmäßig verteilt, angeordneten Gewichtselementen bestehen. Bevorzugt stellt das Befestigungselement zeitgleich ein solches Gewichtselement dar, wie dies beispielsweise bei einem Spannring der Fall sein kann, sodass auf weitere Gewichtselemente verzichtet werden kann. Aufgrund des Gewichtselementes wirkt nach dem Lösen des Befestigungselementes des zweiten Endes der Schutzumhüllung eine Gewichtskraft auf das zweite Ende der Schutzumhüllung, die das zweite Ende der Schutzumhüllung selbstständig in die zweite Stellung bewegt. Somit ist kein Ziehen der Schutzumhüllung über das Filtermaterial nötig, sondern die Schutzumhüllung fällt allein durch das Eigengewicht des am zweiten Ende der Schutzumhüllung angeordneten Gewichtselements bis zum zweiten Abschlusselement, bevorzugt ohne mit der Filteroberfläche in Kontakt zu kommen.

Unter einem Spannring, beispielsweise als Befestigungselement für das zweite Ende der Schutzumhüllung, wird erfindungsgemäß ein Ring verstanden, der aufgrund einer Klemm- bzw. Spannwirkung, einen Gegenstand in einer Stellung befestigen kann. Ein Spannring kann somit ein einfacher Ring sein, dessen Innendurchmesser sich nicht flexibel einstellen lässt, aber auch ein Ring, dessen Innendurchmesser sich flexibel einstellen lässt, wie beispielsweise ein Ring mit einer Öffnung, die mittels einer Schraube oder mittels eines Schnellverschlusses vergrößert, verkleinert oder vollständig geschlossen werden kann.

In einer bevorzugten Ausführungsform überragt das erste und/oder das zweite Abschlusselement, bevorzugt der Abschnitt des ersten und/oder des zweiten Abschlusselementes, an dem das erste bzw. das zweite Ende der Schutzumhüllung befestigt werden, den aus Filtermaterial ausgebildeten Hohlzylinder in radialer Erstreckung. Somit weist das erste und/oder das zweite Abschlusselement einen größeren maximalen Außendurchmesser auf, als der durch das Filtermaterial gebildete Hohlzylinder. Bevorzugt weißt der Bereich des ersten und/oder zweiten Abschlusselementes, an dem das erste bzw. das zweite Ende der Schutzumhüllung befestigt ist, einen größeren maximalen Außendurchmesser auf, als der durch das Filtermaterial gebildete Hohlzylinder. Besonders bevorzugt weist das erste und/oder das zweite Abschlusselement einen um mindestens 5%, bevorzugt um mindestens 10% besonders bevorzugt um mindestens 15%, größeren maximalen Außendurchmesser auf als der maximale Außendurchmesser des durch das Filtermaterial ausgebildeten Hohlzylinders. Abschlusselemente, die den Hohlzylinder in radialer Erstreckung wesentlich überragen, bewirken, dass im Durchmesser größere Spannelemente als Befestigungselemente am zweiten Ende der Schutzumhüllung verwendet werden können, die nach dem Lösen sich selbstständig in die zweite Stellung bewegen, und die den Kontakt mit dem Filtermaterial minimieren.

In einer vorteilhaften Ausgestaltung weist das erste und/oder das zweite Abschlusselement einen Abschnitt zur Befestigung des ersten und/oder des zweiten Endes der Schutzumhüllung auf, der aus einem flexiblen Material, bevorzugt aus einem Vlies-, Filz- oder Schaumstoff-Material, besteht. Dieser Abschnitt umgibt bevorzugt den Hohlzylinder umfangsmäßig. Bevorzugt besteht das erste und/oder zweite Abschlusselement aus einem Ring aus Vlies-, Filz-, oder Schaumstoffmaterial, der bevorzugt ein Ende des Hohlzylinders umfangsmäßig umgibt. Vorzugsweise weist der Abschnitt aus flexiblem Material im nichtkomprimierten Zustand einen größeren Außendurchmesser auf, als der Innendurchmesser des am zweiten Ende der Schutzumhüllung angeordneten Befestigungselementes in Form eines Spannringes, des am zweiten Ende der Schutzumhüllung angeordneten Gewichtselements und/oder der Schutzumhüllung. Eine solche Ausgestaltung hat den Vorteil, dass der Spannring, das Gewichtselement und/oder die Schutzumhüllung an dem Abschnitt aus flexiblem Material festgeklemmt bzw. festgespannt werden können.

In einer vorteilhaften Ausgestaltung der Erfindung ist das zweite Ende der Schutzumhüllung an mindestens zwei, bevorzugt an drei, parallel zur Längsachse des durch das Filtermaterial ausgebildeten Hohlzylinders verlaufenden Führungsschienen befestigt und kann von diesen geführt von der ersten Stellung in die zweite Stellung bewegt werden, wobei die Führungsschienen außerhalb des Hohlzylinders und von diesem beabstandet angeordnet sind. Die Führungsschienen können beispielsweise einfache Stäbe sein, die mit Ösen des zweiten Endes der Schutzumhüllung verbunden sind oder beispielsweise Profilführungsschienen, die mit am zweiten Ende der Schutzumhüllung angeordneten Führungswagen verbunden sind. Bevorzugt sind die Führungsschienen umfangsmäßig gleichmäßig verteilt. Durch Verwendung von Führungsschienen wird gewährleistet, dass das zweite Ende der Schutzumhüllung nicht mit dem Filtermaterial in Kontakt kommt, sodass das zweite Ende der Schutzumhüllung kontaminationsfrei in die zweite Stellung bewegbar ist.

Zur Lösung der Aufgabe ist somit eine Luftfiltervorrichtung, insbesondere eine Absaugvorrichtung, vorgesehen, umfassend eine austauschbare Filterpatrone. Bevorzugt ist eine Luftfiltervorrichtung, in der die austauschbare Filterpatrone vertikal angeordnet ist.

Es ist vorgesehen, dass die Luftfiltervorrichtung die Filterpatrone einschließlich Schutzumhüllung vollständig aufnimmt. Der Luftleitungskanal der Filterpatrone, durch den die gefilterte Luft strömt, ist somit teilweise durch die Schutzumhüllung umgeben. Die, vorzugsweise zusammengeraffte, Schutzumhüllung bildet in Betrieb der Luftfiltervorrichtung somit einen Ring um den Luftleitungskanal der Filterpatrone aus.

Bevorzugt umfasst die Luftfiltervorrichtung eine Filterwechselklappe, die geöffnet werden kann, um das Befestigungselement des zweiten Endes der Schutzumhüllung zu lösen, sodass sich das zweite Ende der Schutzumhüllung zum zweiten Abschlusselement bewegen kann, ohne, dass die Filterpatrone gelöst bzw. bewegt werden muss.

In einer Ausführungsform weist die Luftfiltervorrichtung an einer Längsseite eine Filterwechselklappe auf. In einer vorteilhaften Ausgestaltung ist die Filterpatrone vertikal angeordnet und kann in horizontaler Richtung aus der Luftfiltervorrichtung entnommen werden.

Zur Lösung der Aufgabe ist des Weiteren ein Verfahren zum kontaminationsfreien Wechseln einer vertikal angeordneten Filterpatrone einer erfindungsgemäßen Luftfiltervorrichtung, insbesondere einer Absaugvorrichtung, vorgesehen, umfassend die Schritte
- Öffnen der Filterwechselklappe der Luftfiltervorrichtung,
- Lösen des Befestigungselementes des zweiten Endes der Schutzumhüllung der Filterpatrone,
- Warten bis sich das zweite Ende der Schutzumhüllung durch die Schwerkraft bis zum zweiten Abschlusselement bewegt hat,
- Befestigen des zweiten Endes der Schutzumhüllung an dem zweiten Abschlusselement,
- Lösen und Entnehmen der Filterpatrone aus der Luftfiltervorrichtung,
- Einsetzen einer neuen Filterpatrone und
- Schließen der Filterwechselklappe.

Vorzugsweise wird die Filterpatrone erst bewegt, nachdem die Schutzumhüllung an dem zweiten Abschlusselement befestigt ist.

Bevorzugt wird nach der Entnahme der Filterpatrone eine neue Filterpatrone einschließlich Schutzumhüllung in die Luftfiltervorrichtung eingesetzt. Somit wird die neue Filterpatrone einschließlich Schutzumhüllung in den Strömungskanal eingesetzt.

Die Erfindung wird im Folgenden anhand der Figuren nochmals erläutert.
Fig. 1 zeigt eine Ausführungsform einer Filterpatrone, bei der sich das zweite Ende der Schutzumhüllung in der ersten Stellung befindet.
Fig. 2 zeigt einen Querschnitt einer Filterpatrone (1).
Fig. 3 zeigt eine Ausführungsform einer Filterpatrone, bei der sich das zweite Ende der Schutzumhüllung in der zweiten Stellung befindet.
Fig. 4 zeigt eine Ausführungsform einer Filterpatrone, bei der sich das zweite Ende der Schutzumhüllung in der ersten Stellung befindet.

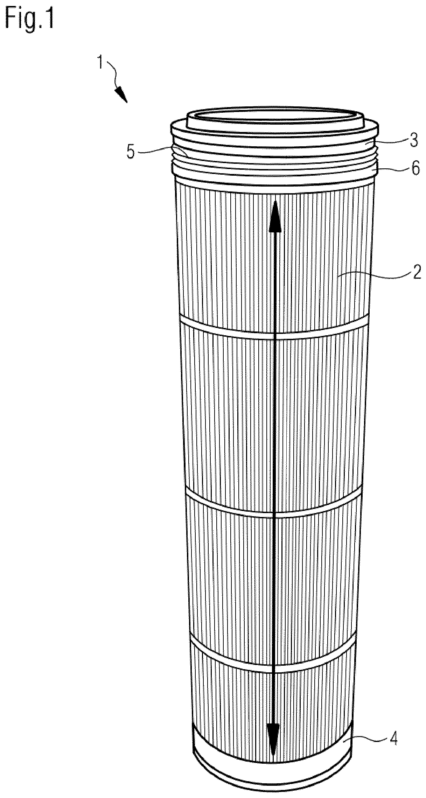

Fig. 1 zeigt eine Ausführungsform einer Filterpatrone (1), bei der sich das zweite Ende der Schutzumhüllung (5) in der ersten Stellung befindet und das den Hohlzylinder ausbildende Filtermaterial (2) somit nicht durch die Schutzumhüllung (5) bedeckt ist. Das eine Ende der Schutzumhüllung (5) ist an dem ersten Abschlusselement (3) befestigt und das zweite Ende der Schutzumhüllung (5) ist mit dem Befestigungselement (6) an dem ersten Abschlusselement (3) lösbar befestigt. Wie durch den Pfeil angedeutet, ist es nach dem Lösen des Befestigungselementes (6) möglich, dass zweite Ende der Schutzumhüllung zusammen mit dem Befestigungselement (6) in Richtung des zweiten Abschlusselementes (4) zu bewegen, wobei sich die zuvor zusammengeraffte Schutzumhüllung (5) ausbreitet und die Schmutzseite des Filtermaterials (2) bedeckt. Das Befestigungselement (6) kann anschließend am zweiten Abschlusselement (4) befestigt werden.

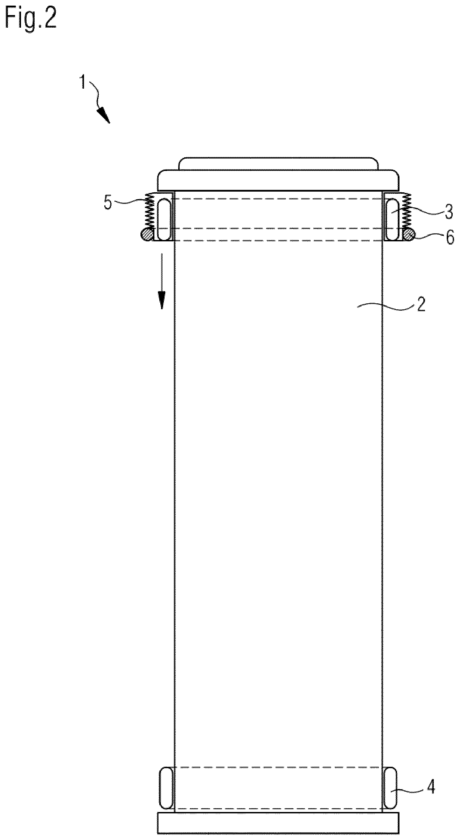

Fig. 2 zeigt einen Querschnitt einer Filterpatrone (1), bei der sich das zweite Ende der Schutzumhüllung in der ersten Stellung befindet. Die Schutzumhüllung (5) ist mit dem ersten Ende an dem ersten Abschlusselement (3) und mit dem zweiten Ende an dem Befestigungselement (6) befestigt, wobei das erste Ende der Schutzumhüllung (5) zwischen dem ersten Abschlusselement (3) und dem Filtermaterial (2) festgeklemmt ist. Das Befestigungselement (6) ist hier beispielhaft als Spannring dargestellt. Das Befestigungselement (6) stellt gleichzeitig ein Gewichtselement dar, das das zweite Ende der Schutzumhüllung nach dem Lösen des Befestigungsmittels (6) in Richtung des zweiten Abschlusselementes (4) zieht. Das erste sowie das zweite Abschlusselement (3, 4) umgeben das Filtermaterial (2) umfangsmäßig und überragen den Hohlzylinder in radialer Erstreckung, wobei beide Abschlusselemente (3, 4) hier beispielhaft als Schaumstoffringe dargestellt sind.

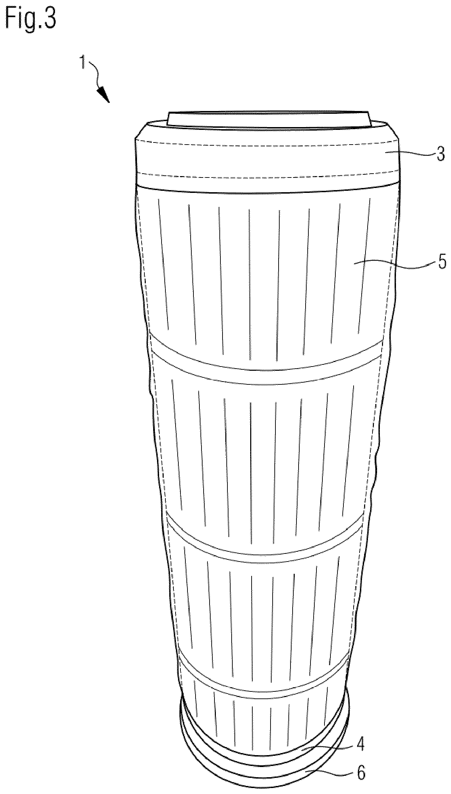

Fig. 3 zeigt eine Ausführungsform einer Filterpatrone, bei der sich das zweite Ende der Schutzumhüllung (5) in der zweiten Stellung befindet. Das Befestigungselement (6) ist am zweiten Abschlusselement (4) befestigt sodass die Schmutzseite des Filtermaterial-Hohlzylinders von der Schutzumhüllung (5) umhüllt ist.

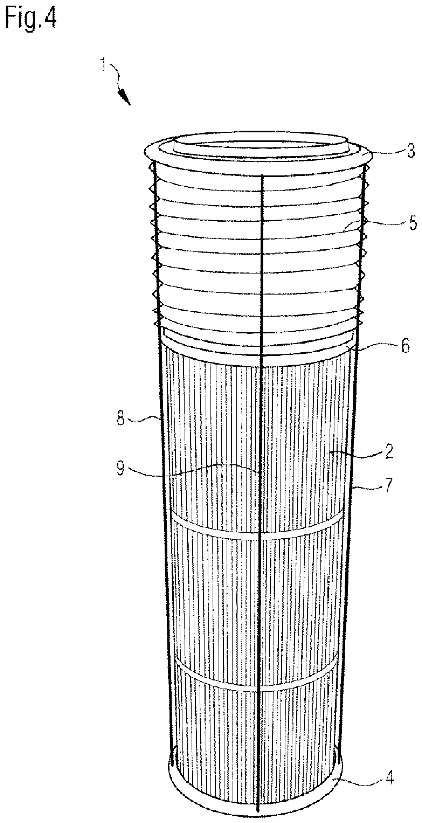

Fig. 4 zeigt eine Ausführungsform einer Filterpatrone (1), bei der sich das zweite Ende der Schutzumhüllung (5) in der ersten Stellung befindet. Das zweite Ende der Schutzumhüllung (5) ist an drei parallel zur Längsachse des durch das Filtermaterial (2) ausgebildeten Hohlzylinders verlaufenden Führungsschienen (7, 8, 9) befestigt und kann von diesen geführt von der ersten Stellung in die zweite Stellung bewegt werden. Die Führungsschienen (7, 8, 9) verlaufen vom ersten Abschlusselement (3) zum zweiten Abschlusselement (4) und sind außerhalb des Hohlzylinders und von diesem beabstandet angeordnet.

### Bezugszeichenliste

- 1.: Filterpatrone
- 2.: Filtermaterial
- 3.: Erstes Abschlusselement
- 4.: Zweites Abschlusselement
- 5.: Schutzumhüllung
- 6.: Befestigungselement
- 7.: Führungsschiene
- 8.: Führungsschiene
- 9.: Führungsschiene

## Patentansprüche

1. Luftfiltervorrichtung, insbesondere Absaugvorrichtung, umfassend eine austauschbare Filterpatrone (1), wobei die Filterpatrone (1) Filtermaterial (2), das einen Hohlzylinder ausbildet,
ein erstes Abschlusselement (3), das an dem ersten Ende des Hohlzylinders angeordnet ist, und
ein zweites Abschlusselement (4), das an dem zweiten Ende des Hohlzylinders angeordnet ist, umfasst,
**dadurch gekennzeichnet,**
**dass** die Filterpatrone (1) eine schlauchförmige Schutzumhüllung (5) aufweist und einschließlich Schutzumhüllung (5) vollständig innerhalb der Luftfiltervorrichtung angeordnet ist, wobei das erste Ende der Schutzumhüllung (5) an dem ersten Abschlusselement (3) befestigt ist, und das zweite Ende der Schutzumhüllung (5) von einer ersten Stellung, in der das zweite Ende der Schutzumhüllung (5) näher an dem ersten Abschlusselement (3) als an dem zweiten Abschlusselement (4) lösbar befestigt ist, in eine zweite Stellung bewegbar ist, in der das zweite Ende der Schutzumhüllung (5) am zweiten Abschlusselement (4) befestigt ist.

2. Luftfiltervorrichtung nach Anspruch 1, **dadurch gekennzeichnet, dass** die Filterpatrone vertikal angeordnet ist und in horizontaler Richtung aus der Luftfiltervorrichtung entnommen werden kann.

3. Luftfiltervorrichtung nach Anspruch 1 oder 2, **dadurch gekennzeichnet, dass** das erste und das zweite Ende der Schutzumhüllung (5) der Filterpatrone in der ersten Stellung an dem ersten Abschlusselement (3) befestigt sind.

4. Luftfiltervorrichtung nach einem der Ansprüche 1 bis 3, **dadurch gekennzeichnet, dass** die Schutzumhüllung (5) der Filterpatrone ein Folienschlauch ist, bevorzugt ein Folienschlauch aus Polyethylen, Polypropylen und/oder Polyvinylchlorid.

5. Luftfiltervorrichtung nach einem der Ansprüche 1 bis 4, **dadurch gekennzeichnet, dass** das zweite Ende der Schutzumhüllung (5) der Filterpatrone ein Befestigungselement (6), bevorzugt ein Befestigungselement (6) ausgewählt aus der Gruppe bestehend aus einem Spannelement, einem Klemmelement, einem Klebelement, einem magnetischen Element und einem Klettverschlusselement, aufweist, mit dem es in der ersten Stellung befestigbar ist und/oder mit dem es in der zweiten Stellung an dem zweiten Abschlusselement (4) befestigbar ist.

6. Luftfiltervorrichtung nach Anspruch 5, **dadurch gekennzeichnet, dass** das Befestigungselement ein Spannring ist, der bevorzugt im nicht gespannten Zustand einen um mindestens 5%, bevorzugt um mindestens 10% besonders bevorzugt um mindestens 15%, größeren Innendurchmesser aufweist als der maximale Außendurchmesser des durch das Filtermaterial ausgebildeten Hohlzylinders.

7. Luftfiltervorrichtung nach einem der Ansprüche 1 bis 6, **dadurch gekennzeichnet, dass** das zweite Ende der Schutzumhüllung (5) der Filterpatrone mindestens ein Gewichtselement umfasst, bevorzugt ein Gewichtselement in Form eines den aus Filtermaterial (2) ausgebildeten Hohlzylinder umgebenden Ringes.

8. Luftfiltervorrichtung nach einem der Ansprüche 1 bis 7, **dadurch gekennzeichnet, dass** das erste und/oder das zweite Abschlusselement (3,4) der Filterpatrone, bevorzugt der Abschnitt des ersten und/oder des zweiten Abschlusselementes (3,4), an dem das erste bzw. das zweite Ende der Schutzumhüllung (5) befestigt werden, den aus Filtermaterial (2) ausgebildeten Hohlzylinder in radialer Erstreckung überragt.

9. Luftfiltervorrichtung nach einem der Ansprüche 1 bis 8, **dadurch gekennzeichnet, dass** das erste und/oder das zweite Abschlusselement (3,4) der Filterpatrone einen Abschnitt zur Befestigung des ersten und/oder des zweiten Endes der Schutzumhüllung (5) aufweist, der aus einem flexiblen Material, bevorzugt aus einem Vlies-, Filz- oder Schaumstoff-Material, besteht.

10. Luftfiltervorrichtung nach einem der Ansprüche 1 bis 9, **dadurch gekennzeichnet, dass** das zweite Ende der Schutzumhüllung (5) der Filterpatrone an mindestens zwei, bevorzugt an drei, parallel zur Längsachse des durch das Filtermaterial (2) ausgebildeten Hohlzylinders verlaufenden Führungsschienen (7, 8, 9) befestigt ist und von diesen geführt von der ersten Stellung in die zweite Stellung bewegt werden kann, wobei die Führungsschienen (7, 8, 9) außerhalb des Hohlzylinders und von diesem beabstandet angeordnet sind.

11. Verfahren zum kontaminationsfreien Wechseln einer vertikal angeordneten Filterpatrone (1) einer Luftfiltervorrichtung, insbesondere einer Absaugvorrichtung, nach einem der Ansprüche 1-10 umfassend die Schritte
- Öffnen der Filterwechselklappe der Luftfiltervorrichtung,
- Lösen des Befestigungselementes (6) des zweiten Endes der Schutzumhüllung (5) der Filterpatrone (1),
- Warten bis sich das zweite Ende der Schutzumhüllung (5) durch die Schwerkraft bis zum zweiten Abschlusselement (4) bewegt hat,
- Befestigen des zweiten Endes der Schutzumhüllung (5) an dem zweiten Abschlusselement (4),
- Lösen und Entnehmen der Filterpatrone (1) aus der Luftfiltervorrichtung,
- Einsetzen einer neuen Filterpatrone und
- Schließen der Filterwechselklappe.

12. Verfahren nach Anspruch 11, **dadurch gekennzeichnet, dass** die Filterpatrone erst bewegt wird, nachdem die Schutzumhüllung an dem zweiten Abschlusselement befestigt ist.

13. Verfahren nach Anspruch 11 oder 12, **dadurch gekennzeichnet, dass** eine neue Filterpatrone einschließlich Schutzumhüllung in die Luftfiltervorrichtung eingesetzt wird.

## Claims

1. Air filter device, in particular suction device, comprising a replaceable filter cartridge (1), wherein the filter cartridge (1) comprises filter material (2) forming a hollow cylinder, a first end element (3) arranged at the first end of the hollow cylinder, and a second end element (4), arranged at the second end of the hollow cylinder, **characterized in that** the filter cartridge (1) has a tubular protective sheath (5) and including protective sheath (5) is arranged entirely within the air filter device, wherein the first end of the protective sheath (5) is attached to the first end element (3), and the second end of the protective sheath (5) is movable from a first position, in which the second end of the protective sheath (5) is detachably attached closer to the first end element (3) than to the second end element (4), to a second position, in which the second end of the protective sheath (5) is attached to the second end element (4).

2. Air filter device according to claim 1, **characterized in that** the filter cartridge is arranged vertically and can be removed from the air filter device in the horizontal direction.

3. Air filter device according to claim 1 or 2, **characterized in that** the first and second ends of the protective sheath (5) of the filter cartridge are fixed to the first end element (3) in the first position.

4. Air filter device according to any one of claims 1 to 3, **characterized in that** the protective sheath (5) of the filter cartridge is a film tube, preferably a film tube made of polyethylene, polypropylene and/or polyvinyl chloride.

5. Air filter device according to any one of claims 1 to 4, **characterized in that** the second end of the protective sheath (5) of the filter cartridge has a fastening element (6), preferably a fastening element (6) selected from the group consisting of a tensioning element, a clamping element, an adhesive element, a magnetic element and a Velcro fastening element, by means of which it can be fastened in the first position and/or by means of which it can be fastened to the second end element (4) in the second position.

6. Air filter device according to claim 5, **characterized in that** the fastening element is a clamping ring which, preferably in the unclamped state, has an inner diameter which is larger by at least 5%, preferably by at least 10%, particularly preferably by at least 15%, than the maximum outer diameter of the hollow cylinder formed by the filter material.

7. Air filter device according to any one of claims 1 to 6, **characterized in that** the second end of the protective sheath (5) of the filter cartridge comprises at least one weight element, preferably a weight element in the form of a ring surrounding the hollow cylinder formed of filter material (2).

8. Air filter device according to any one of claims 1 to 7, **characterized in that** the first and/or the second end element (3, 4) of the filter cartridge, preferably the section of the first and/or the second end element (3, 4) to which the first or the second end of the protective sheath (5), respectively, are fastened, projects in radial extension beyond the hollow cylinder formed from filter material (2).

9. Air filter device according to any one of claims 1 to 8, **characterized in that** the first and/or the second end element (3, 4) of the filter cartridge comprises a section for fastening the first and/or the second end of the protective sheath (5), which section is made of a flexible material, preferably a non-woven, felt or foam material.

10. Air filter device according to any one of claims 1 to 9, **characterized in that** the second end of the protective sheath (5) of the filter cartridge is attached to at least two, preferably three, guide rails (7, 8, 9) running parallel to the longitudinal axis of the hollow cylinder formed by the filter material (2) and can be moved guided by these from the first position to the second position, the guide rails (7, 8, 9) being arranged outside the hollow cylinder and spaced apart therefrom.

11. Method for contamination-free changing of a vertically arranged filter cartridge (1) of an air filter device, in particular a suction device, according to any one of claims 1-10 comprising the steps of
- opening the filter change flap of the air filter device,
- loosening the fastening element (6) of the second end of the protective sheath (5) of the filter cartridge (1),
- waiting until the second end of the protective sheath (5) has moved by gravity to the second end element (4),
- fastening the second end of the protective sheath (5) to the second end element (4),
- loosening and removing the filter cartridge (1) from the air filter device,
- inserting a new filter cartridge and
- closing the filter change flap.

12. Method according to claim 11, **characterized in that** the filter cartridge is moved only after the protective envelope is attached to the second end element.

13. The method according to claim 11 or 12, **characterized in that** a new filter cartridge including protective sheath is inserted into the air filter device.

## Revendications

1. Dispositif de filtration d'air, notamment dispositif aspirant, comprenant une cartouche filtrante (1) interchangeable, la cartouche filtrante (1) comprenant une matière filtrante (2), qui forme un cylindre creux,
un premier élément de terminaison (3), qui est placé sur la première extrémité du cylindre creux, et
un deuxième élément de terminaison (4), qui est placé sur la deuxième extrémité du cylindre creux,
**caractérisé en ce que**
la cartouche filtrante (1) comporte une enveloppe protectrice (5) en forme de flexible et en incluant l'enveloppe protectrice (5), est placée totalement à l'intérieur du dispositif de filtration d'air, la première extrémité de l'enveloppe protectrice (5) étant fixée sur le premier élément de terminaison (3) et la deuxième extrémité de l'enveloppe protectrice (5) étant déplaçable d'une position dans laquelle la deuxième extrémité de l'enveloppe protectrice (5) est fixée de manière amovible plus près du premier élément de terminaison (3) que du deuxième élément de terminaison (4) dans une deuxième position dans laquelle la deuxième extrémité de l'enveloppe protectrice (5) est fixée sur le deuxième élément de terminaison (4).

2. Dispositif de filtration d'air selon la revendication 1, **caractérisé en ce que** la cartouche filtrante est placée à la verticale et peut se retirer en direction horizontale hors du dispositif de filtration d'air.

3. Dispositif de filtration d'air selon la revendication 1 ou 2, **caractérisé en ce que** la première et la deuxième extrémités de l'enveloppe protectrice (5) de la cartouche filtrante sont fixées dans la première position sur le premier élément de terminaison (3).

4. Dispositif de filtration d'air selon l'une quelconque des revendications 1 à 3, **caractérisé en ce que** l'enveloppe protectrice (5) de la cartouche filtrante est de préférence un film tubulaire en polyéthylène, en polypropylène et/ou en chlorure de polyvinyle.

5. Dispositif de filtration d'air selon l'une quelconque des revendications 1 à 4, **caractérisé en ce que** la deuxième extrémité de l'enveloppe protectrice (5) de la cartouche filtrante comporte un élément de fixation (6), de préférence un élément de fixation (6) sélectionné dans le groupe composé d'un élément de serrage, d'un élément de pincement, d'un élément de collage, d'un élément magnétique et d'un élément de fermeture autoagrippante, à l'aide duquel elle est susceptible d'être fixée dans la première position et/ou à l'aide duquel elle est susceptible d'être fixée dans la deuxième position sur le deuxième élément de terminaison (4).

6. Dispositif de filtration d'air selon la revendication 5, **caractérisé en ce que** l'élément de fixation est une bague de serrage qui de préférence en position non serrée présente un diamètre intérieur supérieur d'au moins 5 %, de préférence d'au moins 10% de manière particulièrement préférentielle, d'au moins 15 % au diamètre extérieur maximum du cylindre creux formé par la matière filtrante.

7. Dispositif de filtration d'air selon l'une quelconque des revendications 1 à 6, **caractérisé en ce que** la deuxième extrémité de l'enveloppe protectrice (5) de la cartouche filtrante comporte au moins un élément de poids, de préférence un élément de poids sous la forme d'une bague entourant le cylindre creux formé en une matière filtrante (2).

8. Dispositif de filtration d'air selon l'une quelconque des revendications 1 à 7, **caractérisé en ce que** le premier et/ou le deuxième élément de terminaison (3,4) de la cartouche filtrante, de préférence la section du premier et/ou du deuxième élément de terminaison (3,4) sur laquelle l'on fixe la première ou la deuxième extrémité de l'enveloppe protectrice (5) saillit dans l'extension radiale par-dessus le cylindre creux formé en une matière filtrante (2).

9. Dispositif de filtration d'air selon l'une quelconque des revendications 1 à 8, **caractérisé en ce que** le premier et/ou le deuxième élément de terminaison (3,4) de la cartouche filtrante comporte une section destinée à fixer la première et/ou la deuxième extrémité de l'enveloppe protectrice (5) qui est constituée d'une matière souple, de préférence d'une matière non-tissée, d'une matière en feutre ou d'une matière en mousse synthétique.

10. Dispositif de filtration d'air selon l'une quelconque des revendications 1 à 9, **caractérisé en ce que** la deuxième extrémité de l'enveloppe protectrice (5) de la cartouche filtrante est fixée sur au moins deux, de préférence sur trois rails de guidage (7, 8, 9) conçus à la parallèle de l'axe longitudinal du cylindre creux formé par la matière filtrante (2) et en étant guidée par ces derniers, peut être déplacée de la première position dans la deuxième position, les rails de guidage (7, 8, 9) étant placés à l'extérieur du cylindre creux et en étant écartés de celui-ci.

11. Procédé, destiné à changer sans contamination une cartouche filtrante (1) placée à la verticale d'un dispositif de filtration d'air, notamment d'un dispositif aspirant selon l'une quelconque des revendications 1 à 10, comprenant les étapes consistant à :
- ouvrir la trappe de changement de filtre du dispositif de filtration d'air,
- désolidariser l'élément de fixation (6) de la deuxième extrémité de l'enveloppe protectrice (5) de la cartouche filtrante (1),
- attendre jusqu'à ce que la deuxième extrémité de l'enveloppe protectrice (5) se soit déplacée sous l'effet de la force de gravité jusqu'au deuxième élément de terminaison (4),
- fixer la deuxième extrémité de l'enveloppe protectrice (5) sur le deuxième élément de terminaison (4),
- désolidariser et retirer la cartouche filtrante (1) hors du dispositif de filtration d'air,
- insérer une nouvelle cartouche filtrante et
- fermer la trappe de changement de filtre.

12. Procédé selon la revendication 11, **caractérisé en ce que** l'on ne déplace la cartouche filtrante qu'une fois que l'enveloppe protectrice est fixée sur le deuxième élément de terminaison.

13. Procédé selon la revendication 11 ou 12, **caractérisé en ce que** l'on insère une nouvelle cartouche filtrante en incluant l'enveloppe protectrice dans le dispositif de filtration d'air.
